Europäisches Patentamt

European Patent Office

Office européen des brevets

(19)

(11) Numéro de publication : **0 524 871 B1**

(12) # FASCICULE DE BREVET EUROPEEN

(45) Date de publication du fascicule du brevet :
**10.05.95 Bulletin 95/19**

(51) Int. Cl.[6] : **H04N 7/26, H03M 7/30**

(21) Numéro de dépôt : **92402097.7**

(22) Date de dépôt : **21.07.92**

(54) **Un procédé de codage de signaux hybride adaptatif.**

(30) Priorité : **24.07.91 FR 9109359**

(43) Date de publication de la demande :
**27.01.93 Bulletin 93/04**

(45) Mention de la délivrance du brevet :
**10.05.95 Bulletin 95/19**

(84) Etats contractants désignés :
**DE FR GB NL**

(56) Documents cités :
**US-A- 4 910 608**
**ICASSP'88, New York, 11-14 avril 1988, vol. 2, pages 788-791, IEEE, New York, US; M. BREEUWER: "Transform coding of images using directionally adaptive vector quantization"**
**ICASSP'86, Tokyo, 7-11 avril 1986, pages 145-148, IEEE, New York, US; J.P. MARESCQ et al.: "Vector quantization in transformed image coding"**
**ICASSP'85, PROCEEDINGS, Tampa, Florida, 26-29 mars 1985, vol. 1, pages 129-132, IEEE, New York, US; S.E. BUDGE et al.: "Compression of color digital images using vector quantization in product codes"**

(56) Documents cités :
**ICASSP'89, Glasgow, 23-26 mai 1989, vol 3, pages 1831-1834, IEEE, New York, US; J.W. KIM et al.: "Discrete cosine transform - classified VQ technique for image coding"**
**IEEE INTERNATIONAL SYMPOSIUM ON CIRCUITS AND SYSTEMS, New Orleans, LA, 1-3 mai 1990, vol. 2, pages 1007-1010, IEEE, New York, US; L. LI et al.: "Classified vector quantization of images using texture analysis"**
**IEE PROCEEDINGS-I, vol. 137, no. 6, partie I, decembre 1990, pages 417-423, Stevenage, Herts, GB; K.C. CHUA et al.: "Error detection and correction of vector quantised digital images"**

(73) Titulaire : **Etablissement Public Télédiffusion de France**
**10, rue d'Oradour-sur-Glane**
**F-75015 Paris (FR)**

(72) Inventeur : **Baina, Jamal**
**16 rue du Docteur Bernheim**
**F-54000 Nancy (FR)**
Inventeur : **Laprevote,Arnaud**
**1 rue Tortue**
**F-57050 Metz (FR)**

(74) Mandataire : **Rodhain, Claude et al**
**Cabinet Claude Rodhain S.A.**
**3, rue Moncey**
**F-75009 Paris (FR)**

EP 0 524 871 B1

## Description

L'invention concerne un procédé de codage de signaux notamment d'image pour réduire la quantité d'informations à transmettre, ou à enregistrer, lorsque les signaux ont été numérisés sous forme de blocs. Il est applicable en particulier aux systèmes de transmission vidéo-numériques lorsqu'il est nécessaire de réduire le débit d'informations à transmettre à travers des canaux de transmission bas débit, plus particulièrement pour la télésurveillance, la téléconférence ou la domotique.

Il est connu, dans le document FR 2648978, de coder une image numérisée en mettant en oeuvre une transformation bidimensionnelle, par exemple une transformation en cosinus discrète. Le codage par transformation permet de séparer l'information pertinente et l'information redondante dans l'image. On connaît aussi des procédés de codage par quantification vectorielle. Le codage par quantification vectorielle échange des blocs ou des vecteurs d'éléments d'image par un index obtenu d'un dictionnaire préétabli constitué de blocs ou vecteurs d'éléments d'image représentants. Un procédé de codage par quantification vectorielle est décrit dans le document EP 0240948. Les procédés de codage par quantification vectorielle opèrent, soit dans le domaine des blocs d'image, soit dans le domaine des blocs transformés.

Jusqu'à présent, les procédés de codage par quantification se limitent à la manipulation de données numériques sans analyse préalable des caractéristiques de l'information manipulée.

On connaît en particulier de l'article de M. BREEUWER (ICASSP'88 New-York 11-14 avril 1988 Vol. 2 p. 788-791 IEEE, New-York US- "Transform coding of images using directionally adaptative vector quantization") de déterminer des classes directionnelles dans l'espace des pixels. Cette méthode nécessite en moyenne des centaines de calculs pour chaque pixel et 700.000 points mémoire sont nécessaires pour stocker le dictionnaire. Les temps de traitement sont donc longs. L'article de M. MARESCQ (ICASSP'86 Tokyo 7-11 avril 1986 p 145-148 IEEE, New-York, US "Vector quantization is transformed image coding") met en oeuvre une méthode consistant à coder les coefficients en "zig-zag" et à rechercher dans quelle partie du bloc se trouvent les coefficients significatifs. Il s'agit donc simplement d'éliminer des coefficients moins significatifs. La quantification vectorielle proprement dite reste classique. Le dictionnaire est de taille importante et le codage d'une image prend entre quelques minutes et une heure sur un ordinateur GOULD 2750.

L'invention à pour objet de perfectionner les procédés de codage à transformation et par quantification vectorielle. L'invention propose un procédé de codage d'un signal numérisé sous forme d'au moins un bloc à coder et comprenant chacun un nombre prédéterminé d'échantillons numériques, dans lequel ledit bloc de signal numérisé à coder est transformé par une transformation bi-dimensionnelle pour produire un bloc transformé de coefficients transformés représentant les composantes fréquentielles du bloc, ledit bloc transformé étant représenté au cours d'une étape de quantification vectorielle par un bloc vectorisé comportant au moins un vecteur de coefficients transformés sélectionné dans un dictionnaire, caractérisé en ce que l'étape de quantification vectorielle met en oeuvre pour ladite sélection une distorsion appliquée aux vecteurs d'un dictionnaire élargi comprenant d'une part les vecteurs d'un dictionnaire de base et, d'autre part, des vecteurs dérivés obtenus en appliquant aux vecteurs du dictionnaire de base des transformations géométriques pour lesquelles, lorsqu'elles sont appliquées aux blocs de signal numérisé, leur correspondent également des transformations spécifiques dans les blocs transformés.

Il est avantageux de remarquer dans le cas des images qu'il existe une correspondance entre les blocs d'images et les blocs transformés lorsqu'on opère des transformations géométriques simples dans les blocs. Par conséquent des blocs d'image liés entre eux par une transformation géométrique d'un bloc de référence peuvent être représentés par le même élément du dictionnaire correspondant au bloc d'image de référence sous réserve d'identifier le type de transformation à appliquer au bloc d'image de référence reconstruit pour obtenir le bloc d'image d'origine. Cette propriété peut être appliquée de manière plus générale à toute information numérisée sous forme de blocs.

Plus particulièrement l'invention a pour objet un procédé de codage d'un signal numérisé sous forme de blocs, tel que défini dans la revendication 1, ainsi qu'un procédé de décodage tel que défini dans la revendication 8. D'autres modes de réalisation avantageux de l'invention sont mentionnés dans les revendications dépendantes.

D'autres caractéristiques et avantages de l'invention apparaîtront encore mieux à la lecture de la description qui suit faite en référence aux dessins.

La figure 1 est un organigramme illustrant le procédé de codage selon l'invention.

La figure 2 illustre une installation de transmission de signaux d'image codés selon l'invention.

La figure 3 illustre l'organisation des données numériques dans les blocs d'images et les blocs transformés.

Les figures 4 et 5 sont des organigrammes illustrant la classification des blocs transformés.

La figure 6 illustre les transitions d'image qui peuvent être obtenues à partir d'un vecteur.

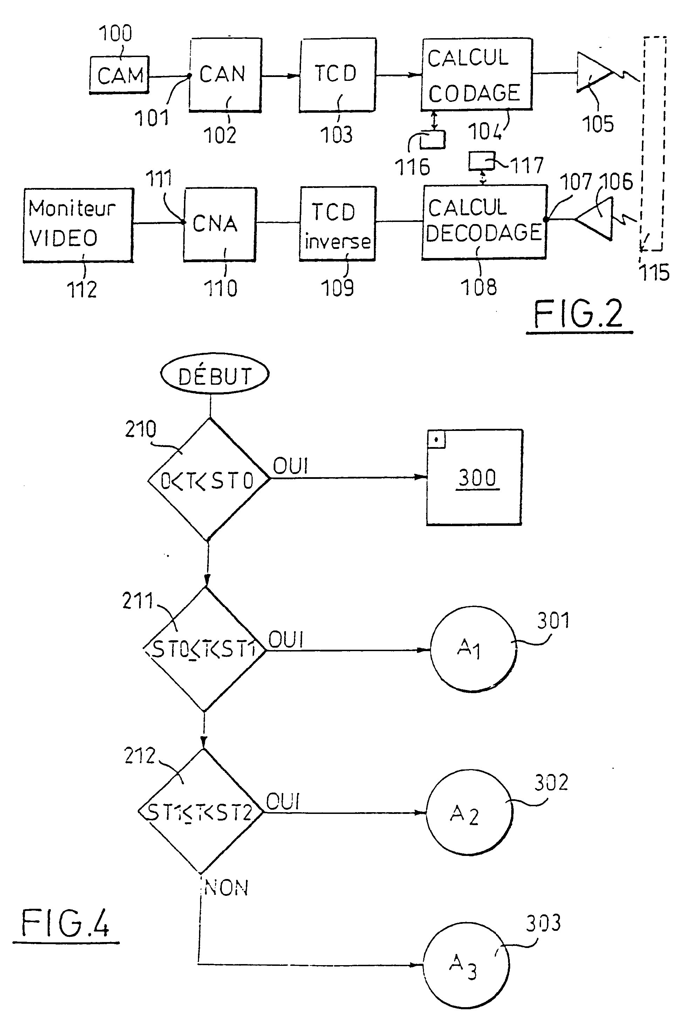

En se reportant à la figure 2, un équipement de vidéo-transmission, pour une installation de télésurveillance par exemple, comprend une caméra 100 pour former des signaux d'images, un convertisseur 102 analogique/numérique pour numériser les signaux d'images sous forme de matrices 1 de données numériques représentatives de la luminance des pixels d'image, un processeur 103 de transformation de partitions de matrices 1 sous forme de blocs d'image 2 comprenant un nombre prédéterminé de données numériques pour former des blocs 3 transformés de coefficients, un processeur 104 pour coder les blocs transformés et fournir à un émetteur 105 un signal numérique codé d'émission, un canal de transmission 115 à faible débit pour fournir le signal numérique codé à un récepteur 106, un processeur 108 pour décoder le signal numérique codé reçu sous forme de blocs transformés de coefficients, un processeur 109 appliquant aux blocs transformés de coefficients une transformation inverse pour fournir des blocs d'image, un convertisseur 110 pour former un signal d'image analogique à partir des blocs d'image et un moniteur 112 pour former une image à partir du signal d'image analogique.

Pour les installations de télésurveillance, les images sont généralement des images noir et blanc de sorte que les données numériques dans les blocs d'image représentent seulement la luminance des éléments d'image. La luminance d'un élément d'image est codé sur 8 éléments binaires pour traduire jusqu'à 255 niveaux de luminance. Les blocs d'image sont des blocs 8 par 8 de données numériques pour simplifier leur transformation en blocs de coefficients et diminuer les temps de calcul. La transformation des blocs d'image est une transformation bidimensionnelle en cosinus discrète (TCD). Les blocs 3 transformés de coefficients sont de même taille que les blocs 2 d'image et les coefficients F représentent des composantes fréquentielles des blocs d'image qui leur correspondent par la transformation TCD.

Dans chaque bloc 3 transformé de taille nxn, où les coefficients ont des indices lignes compris entre 0 et n-1 et des indices colonnes compris entre 0 et n-1, le coefficient de coordonnées (0,0) représente la composante fréquentielle continue, les autres coefficients représentant les composantes fréquentielles alternatives. Les composantes de basse fréquence correspondent aux coefficients de faibles indices et les composantes de haute fréquence aux coefficients d'indice élevé. On sait que les variations globales de luminance dans le bloc sont associées aux basses fréquences et les variations locales (au niveau de pixels voisins) aux hautes fréquences.

Il existe une correspondance entre les blocs d'images et les blocs transformés lorsqu'on opère des transformations géométriques simples dans les blocs d'images. En particulier, les blocs d'image homogènes ne sont représentés dans le domaine fréquentiel que par la composante fréquentielle continue F(0,0), les autres composantes fréquentielles étant négligeables. Les évolutions respectivement verticales et horizontales de la luminance dans les blocs d'image sont exclusivement matérialisées dans les blocs transformés par les coefficients respectivement de la première ligne et de la première colonne du bloc transformé. Enfin, les transformations intervenant sur la position des pixels dans un bloc d'image ou sur leur niveau de luminance se matérialisent le plus souvent par une simple inversion de signe des coefficients dans le bloc transformé correspondant. Ainsi, pour une transformation qui fait correspondre à un pixel la valeur complémentaire à 255 de sa luminance (LUT inverse) dans un bloc d'image 2, la composante fréquentielle continue F(0,0), qui représente deux fois la moyenne, est remplacée par son complément à 510 et les composantes fréquentielles alternatives ont leur signe inversé. Pour une transformation qui fait correspondre à un pixel dans le bloc d'image le pixel symétrique par rapport à la première médiane (médiane verticale) du bloc d'image, la composante fréquentielle continue F(0,0) est inchangée, les composantes fréquentielles alternatives F(u,2v) dont les indices des colonnes sont pairs sont inchangés et les composantes fréquentielles alternatives F(u,2v+1) dont les indices colonnes sont impairs ont leur signe inversé. Pour une transformation qui fait correspondre à un pixel dans le bloc d'image le pixel symétrique par rapport à la seconde médiane (médiane horizontale) du bloc d'image, la composante fréquentielle continue F(0,0) est inchangée, les composantes fréquentielles alternatives F(2u,v) dont les indices des lignes sont pairs, sont inchangées et les composantes fréquentielles alternatives F(2u+1,v) dont les indices des lignes sont impairs ont leur signe inversé. Pour une transformation qui fait correspondre à un pixel dans un bloc d'image le pixel symétrique par rapport à la première diagonale du bloc d'image, les composantes fréquentielles alternatives F(u,v) sont interverties symétriquement par rapport à la première diagonale du bloc transformé. Pour une transformation qui fait correspondre à un pixel dans un bloc d'image le pixel symétrique par rapport à la seconde diagonale du bloc d'image, les composantes fréquentielles alternatives sont interverties symétriquement par rapport à la première diagonale du bloc transformé pour les indices de ligne et de colonne de même parité et ont leur signe inversé pour les autres.

Les considérations ci-dessus sont applicables à tout bloc de données numérisées, quelles qu'elles soient, puisqu'il s'agit d'exploiter des propriétés liées à la transformation bidimensionnelle entre les blocs de données numérisées et les blocs transformés.

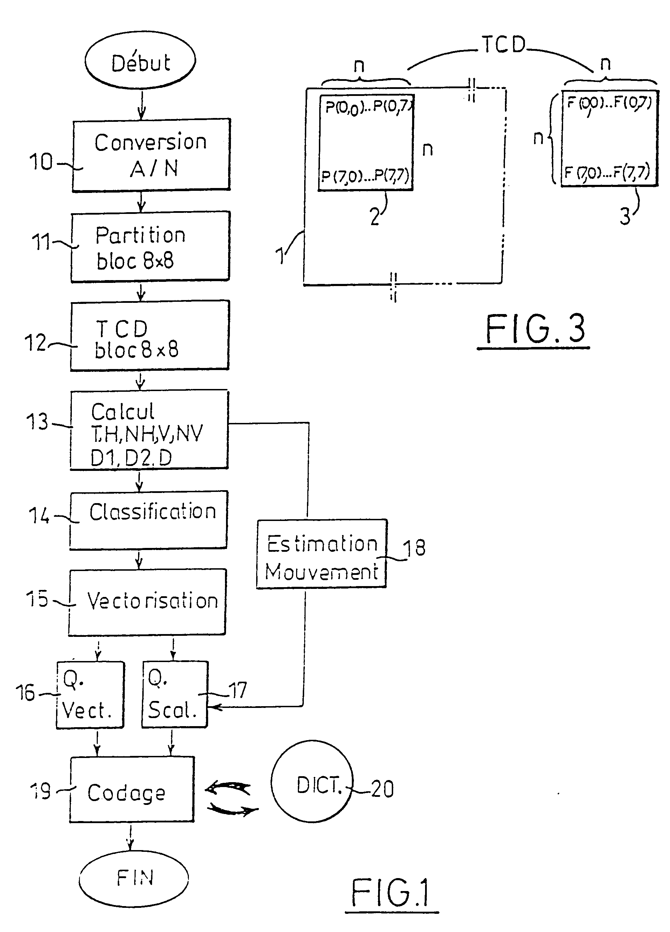

Partant de cela, en se reportant à la figure 1, chaque signal d'image analogique, par exemple un signal vidéo, est numérisé dans l'étape 10 pour former une image numérisée 1. L'image numérisée est partitionnée en blocs d'image 2 de 8 x 8 éléments dans l'étape 11. Chaque bloc d'image 8 x 8 est transformé en un bloc transformé 3 de coefficients TCD dans l'étape 12. Les blocs transformés 3 successifs sont classés dans une étape 14 en fonction de paramètres calculés dans une étape 13 pour être codés. La vectorisation dans l'étape 15 d'un bloc transformé est fonction de la classification déterminée pour le bloc.

La classification des blocs transformés 3 permet de choisir une vectorisation particulière en fonction de l'aspect visuel du bloc image correspondant à partir des coefficients TCD du bloc transformé, éventuellement de l'activité spatio-fréquentielle globale d'un bloc transformé.

Tout d'abord, au cours d'une première étape, qui peut être omise, on définit un premier paramètre T pour quantifier l'activité spatio-fréquentielle d'un bloc transformé 3 et discriminer les blocs 3 homogènes, faiblement actifs, moyennement actifs et très actifs (l'activité représente les variations d'amplitudes de luminance dans un bloc d'image). Le paramètre T est donné par la relation suivante:

$$T = \left( \sum_{u=0}^{n-1} \sum_{v=0}^{n-1} [F(u,v)]^2 \right) - [F(0,0)]^2$$

où F est un coefficient TCD dans le bloc 3 transformé, (u, v) sont les coordonnées du coefficient dans le bloc et n est une des dimensions d'un bloc transformé, par exemple 8.

On définit aussi des paramètres pour identifier des types de blocs image en fonction de leur particularité visuelle (transition verticale ou horizontale de luminance, symétrie par rapport à une diagonale ou un point central dans le bloc image). Ces seconds paramètres sont donnés par les relations suivantes:

$$H = \sum_{v=1}^{n-1} [F(0,v)]^2$$

$$NH = \sum_{u=1}^{n-1} \sum_{v=0}^{n-1} [F(u,v)]^2$$

$$V = \sum_{u=1}^{n-1} [F(u,0)]^2$$

$$NV = \sum_{u=0}^{n-1} \sum_{v=1}^{n-1} [F(u,v)]^2$$

$$D1 = \sum_{u=0}^{n-1} \sum_{v=0}^{n-1} [F(u,v) - F(v,u)]^2$$

$$D2 = \left( \sum_{u=0}^{n/2-1} \sum_{v=0}^{n/2-1} [F(2u,2v) - F(2v,2u)]^2 + \right.$$
$$\sum_{u=0}^{n/2-1} \sum_{v=0}^{n/2-1} [F(2u+1,2v+1) - F(2v+1,2u+1)]^2 ) +$$
$$\left. ( \sum_{u=0}^{n/2-1} \sum_{v=0}^{n/2-1} [F(2u,2v+1) + F(2v+1,2u)]^2 \right)$$

$$D = \sum_{u=1}^{n-1} [F(u,u)]^2$$

où

- NH/H discrimine les blocs d'image ayant des transitions verticales de luminance;
- NV/V discrimine les blocs d'image ayant des transitions horizontales de luminance;
- D1 discrimine les blocs d'image ayant une symétrie par rapport à la première diagonale;
- D2 discrimine les blocs d'image ayant une symétrie par rapport à la seconde diagonale;
- D discrimine les blocs d'image ayant une symétrie par rapport au centre.

Par conséquent, selon l'invention on classe les blocs transformés parmi des classes "d'activité spatiale" puis des classes géométriques ou "visuelles". L'oeil humain est plus sensible aux défauts des images ayant une importante évolution spatiale.

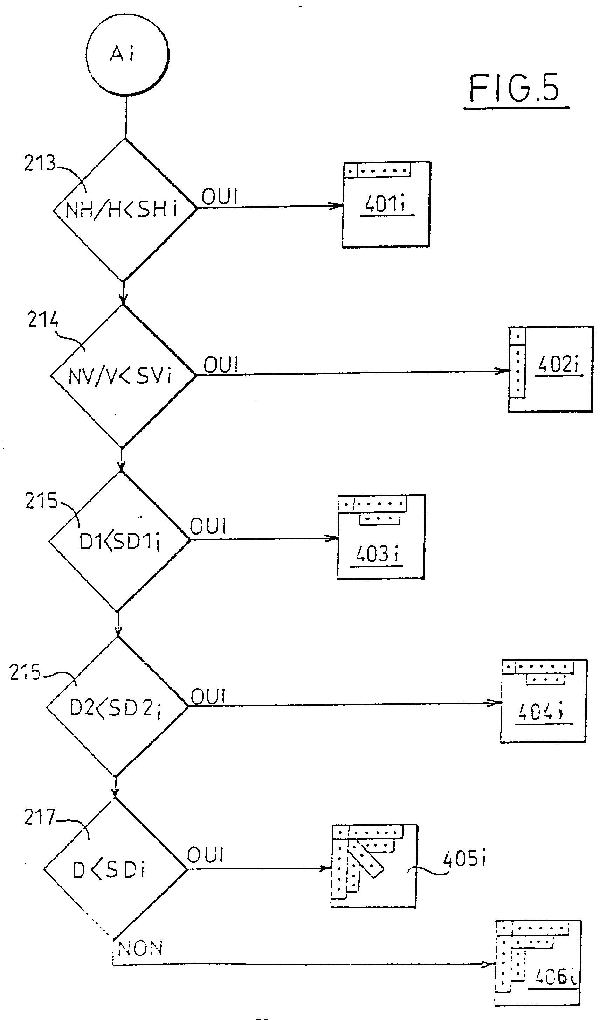

Il s'agit donc de coder chaque bloc d'image en fonction de la nature du bloc d'image et ses caractéristiques "psycho-visuelles". Le paramètre T est comparé à un jeu de premières valeurs de seuil pour déterminer, pour un bloc, la classe d'activité spatiale d'appartenance. Sur la figure 4, dans l'étape 210, T est comparé à la première valeur de seuil ST0. Le seuil maximal ST0 délimite la classe d'activité spatiale 300 des blocs d'image homogènes. Si T est supérieur ou égal à la valeur de seuil ST0, il est comparé à la seconde valeur de seuil ST1 dans l'étape 211. Le seuil maximal ST1 délimite la classe d'activité spatiale 301 des blocs d'image faiblement actifs. Si T est supérieur ou égal à ST1, il est comparé à la troisième valeur de seuil ST2. Le seuil maximal ST2 délimite la classe d'activité spatiale 302 des blocs d'image moyennement actifs. Si T est supérieur ou égal à ST2, le bloc transformé est classé dans la classe d'activité spatiale 303 des blocs d'image très actifs. Ce préclassement à partir du paramètre T d'activité spatial permet de coder différemment les blocs d'image en fonction du classement des blocs transformés, c'est-à-dire de vectoriser de façon adaptative les blocs transformés.

Sur la figure 5, les blocs transformés classés à partir du paramètre T d'activité spatiale sont classés de nouveau à partir des paramètres NH/H,NV/V,D1,D2,D qui sont comparés à des secondes valeurs de seuil délimitant des classes géométriques 401-406 selon des particularités géométriques correspondant à des particularités visuelles. En fait, seuls les blocs d'image appartenant aux classes d'activité spatiale 301,302 et 303, sont classés parmi les classes géométriques ou visuelles. Chaque bloc transformé 3, ayant fait l'objet d'un classement dans une des classes d'activité spatiale 301,302,303, est classé parmi des classes visuelles. Dans l'étape 213, NH/H est comparé à la valeur de seuil SHi, i désignant un numéro de classe d'activité spatiale variant de 1 à 3 pour les classes 301 à 303. Le seuil maximal SHi délimite la classe visuelle 401i des blocs d'image à transition verticale. Si NH/H est supérieur ou égal à SHi, dans l'étape 214, NV/V est comparé à la valeur de seuil SVi. Le seuil maximal SVi délimite la classe visuelle 402i des blocs d'image à transition horizontale. Si NV/V est supérieur ou égal à SVi, D1 est comparé à la valeur de seuil SD1i dans l'étape 215. La seuil maximal SD1i délimite la classe visuelle 403i des blocs d'image à symétrie par rapport à la première diagonale. Si D1 est supérieur ou égal à SD1i, D2 est comparé à la valeur de seuil SD2i dans l'étape 216. Le seuil maximal SD2i délimite la classe visuelle 404i des blocs d'image à symétrie par rapport à la seconde diagonale. Si D2 est supérieur ou égal à SD2i, D est comparé à la valeur de seuil SDi dans l'étape 217. Le seuil maximal SDi délimite la classe visuelle 405 des blocs d'image à symétrie par rapport au centre. Dans les autre cas, le bloc transformé est classé dans la classe visuelle 406i des blocs d'image quelconques.

Les valeurs de seuil ST0,ST1,ST2, SHi,SVi,SD1i,SD2i,SDi sont ajustées manuellement après plusieurs essais pour avoir le moins de dégradation possible dans les images reconstruites et pour avoir des classes visuelles significatives. Pour une installation de télésurveillance avec des images noir et blanc dont chaque pixel a 255 niveaux de luminance, les valeurs de seuils sont par exemple les suivantes:

$ST0=10$; $ST1=80$; $ST2=160$

$SH1=SV1=0,80$; $SH2=SV2=0,60$; $SH3=SV3=0,10$

$SD1_1=SD2_1=20$; $SD1_2=SD2_2=15$

$SD1_3=SD2_3=10$; $SD_1=SD_2=SD_3=10$

La valeur de seuil ST0 est choisie pour englober le plus de blocs transformés possible sans pour autant que dans l'image reconstruite on constate une mosaïque de pixels de même niveau de luminance. Le seuillage est adapté à chaque classe d'appartenance. Il est grossier pour les classes d'activité spatiale faible, et fin pour les classes d'activité spatiale élevée. En d'autres termes, pour une classe d'activités faible, on peut mettre en oeuvre des seuils plus élevés (et donc plus grossiers) en particulier pour les classes géométriques 401i et 402i qui ne comportent qu'un seul vecteur. Un bloc appartenant à une classe d'activité faible est alors admis plus facilement dans les classes comprenant moins de vecteurs (401i à 404i), d'où une compression plus importante des informations sans dégradation visible de l'image. Par contre, pour les classes d'activité spatiale élevée, le seuillage est plus exigeant étant donné que l'oeil est plus sensible aux défauts de telles images. La mise en oeuvre à la fois de classes géométriques, de classes d'activité spatiale et du seuillage adapté permet, in fine, de représenter une image avec moins d'informations binaires (compression maximale).

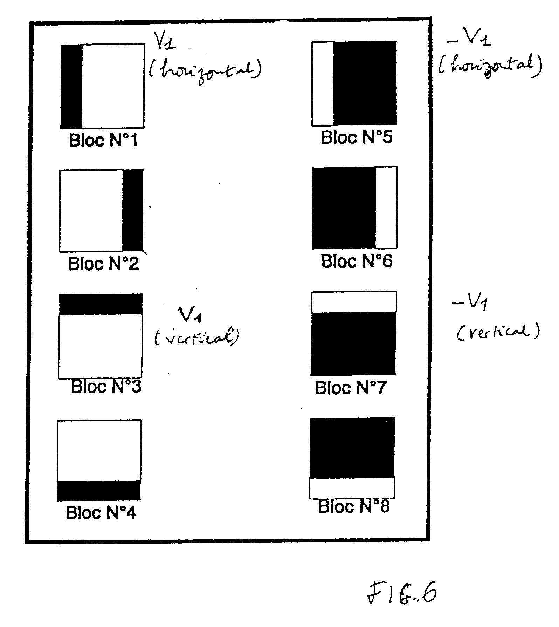

Après l'étape de classification 14, les blocs transformés sont vectorisés dans l'étape 15. La vectorisation

des blocs transformés a pour objet de choisir des coefficients TCD dans chaque bloc transformé qui soient représentatifs de la classe à laquelle appartient le bloc transformé considéré. La vectorisation est adaptative aux caractéristiques visuelles des blocs d'image. Ainsi, en se reportant aux figures 5 et 6, on a fait apparaître, pour chaque classe, les coefficients pertinents retenus pour constituer les vecteurs servant de base au codage dans les encadrés représentant les classes. Pour une application de télésurveillance telle que décrite précédemment, la vectorisation d'un bloc transformé 3 aboutit à la formation des vecteurs de coefficients TCD suivants en fonction de la classe d'appartenance du bloc transformé (le bloc transformé comporte 64 coefficients TCD indiqués par F(u,v) où (u,v) sont les coordonnées d'un coefficient TCD dans le bloc transformé, u étant l'indice des lignes allant de 0 à 7 et v l'indice des colonnes allant de 0 à 7).

- Classe 300 des blocs homogènes. Seul le coefficient F(0,0) représentant la composante fréquentielle continue est pris en compte. Ce coefficient particulier sera codé par quantification scalaire comme décrit ci-après.
- Classe visuelle 401i des blocs d'image à transition verticale: la composante fréquentielle continue F(0,0) est retenue ainsi que le vecteur composé des coefficients

(F(0,1);F(0,2);F(0,3);F(0,4);F(0,5)) qui sont les composantes fréquentielles alternatives de la première ligne du bloc transformé à droite de sa première diagonale
- Classe visuelle 402i des blocs d'image à transition horizontale : la composante fréquentielle continue F(0,0) est retenue ainsi que le vecteur composé des coefficients

(F(1,0);F(2,0);F(3,0);F(4,0);F(5,0)) qui sont les composantes fréquentielles alternatives de la première colonne du bloc transformé à gauche de sa première diagonale
- Classes visuelles 403i et 404i des blocs d'image à symétrie par rapport à la première diagonale ou à la seconde diagonale: la composante fréquentielle continue F(0,0) est retenue ainsi que les vecteurs composés des coefficients

(F(0,1);F(0,2);F(0,3);F(0,4);F(0,5)) et
(F(1,2);F(1,3);F(1,4)) qui sont respectivement les composantes fréquentielles alternatives de la première et la seconde ligne du bloc transformé et à droite de sa première diagonale.
- Classe visuelle 405i des blocs d'image à symétrie par rapport à un point central: la composante fréquentielle continue F(0,0) est retenue ainsi que les vecteurs composés des coefficients

(F(0,1);F(0,2);F(0,3);F(0,4);F(0,5));
(F(1,2);F(1,3);F(1,4));
(F(1,0);F(2,0);F(3,0);F(4,0);F(5,0));
(F(2,1);F(3,1);F(4,1));

(F(1,1);F(2,2);F(3,3)) qui sont respectivement les composantes fréquentielles alternatives de la première et seconde lignes, première et seconde colonnes à droite et à gauche respectivement de la première diagonale du bloc transformé, et les composantes fréquentielles alternatives sur la diagonale du bloc transformé.

- Classe visuelle 406i des blocs d'image sans caractéristique particulière: la composante fréquentielle continue F(0,0) est retenue ainsi que les vecteurs composés des coefficients

(F(0,1);F(0,2);F(0,3);F(0,4);F(0,5));
(F(1,2);F(1,3);F(1,4));
(F(1,0);F(2,0);F(3,0);F(4,0);F(5,0));

(F(2,1);F(3,1);F(4,1)) qui sont respectivement les composantes fréquentielles alternatives de la première et seconde lignes, première et seconde colonnes du bloc transformé à droite et à gauche respectivement de sa première diagonale.

La dimension des vecteurs de coefficients TCD peut être modifiée (étendue) pour augmenter la qualité du codage selon l'invention.

Le codage selon l'invention est un codage hybride par quantification scalaire et quantification vectorielle. La composante fréquentielle continue F(0,0) est quantifiée par quantification scalaire dans l'étape 17 après une étape d'estimation de mouvement 18 sur les blocs transformés fournis en séquence. On sait que pour une application de télésurveillance, la redondance temporelle du signal d'image vidéo est importante. Les blocs d'image dont les luminances évoluent fréquemment et de façon importante sont très peu nombreux. Il est donc avantageux d'utiliser un codage par prédiction et estimation de mouvement en parallèle au codage par quantification vectorielle. Chaque bloc transformé à coder est comparé à plusieurs prédécesseurs directs enregistrés en mémoire. Si un bloc transformé codé qui, par déplacement simple, peut remplacer le bloc transformé à coder, une simple indication du mot code permet de restituer le bloc en mouvement au décodage. La recherche du déplacement est effectuée à partir d'un vecteur dont les éléments sont la composante fréquentielle continue F(0,0) et le paramètre d'activité spatial T calculé. Il y a mouvement si un bloc transformé prédécesseur présente les mêmes caractéristiques que le bloc transformé à coder, c'est-à-dire lorsque les composantes fréquentielles et les paramètres d'activité spatiale sont identiques.

Le vecteur [F(0,0),T] utilisé pour l'estimation de mouvement est exploité pour comparer deux blocs transformés successifs dans le temps. Si aucun des deux éléments du vecteur n'évolue, le mot code fourni dans l'étape de codage 19 indique au décodeur de restituer le bloc transformé précédent. Si le paramètre T évolue mais pas la composante fréquentielle continue, le codage spatial de quantification vectorielle dans le domaine transformé est appliqué à tout le bloc transformé. Si la composante fréquentielle continue évolue mais pas le paramètre T, on détermine la différence entre les deux composantes fréquentielles continues successives, la différence étant quantifiée par un quantificateur scalaire dans l'étape 17. Les composantes fréquentielles alternatives sont maintenues. Si à la fois la composante fréquentielle continue et le paramètre T évoluent, le quantificateur scalaire code la différence entre les composantes fréquentielles continues et le quantificateur vectoriel réalise le codage des composantes fréquentielles alternatives.

Les composantes fréquentielles alternatives d'un bloc transformé sont codées par quantification vectorielle à partir d'un dictionnaire de vecteurs représentants 20. Le codage par quantification vectorielle consiste, de façon connue, à chercher dans le dictionnaire 20 un vecteur représentant, le plus proche du vecteur à coder à partir d'une distance. Le dictionnaire 20 est constitué à partir d'un ensemble de blocs transformés d'apprentissage en utilisant la méthode de classement des vecteurs dite "LBG" et décrite dans l'article "An algorithm for vector quantizer design; IEEE trans. on Com, de Y.LINDE, A. BUZO, R.M. GRAY, vol.COM-28, N°1 janvier 1980".

Selon l'invention, le dictionnaire 20 est partitionné en fonction des classes visuelles d'appartenance des vecteurs représentants pour être le plus condensé et le plus représentatif possible. Les classes visuelles 401-406 partitionnent le dictionnaire 20 en autant de sous-dictionnaires contenant des vecteurs de coefficients représentants ayant la même taille que les vecteurs formés pendant l'étape de vectorisation 15. La sélection d'un vecteur représentant dans le dictionnaire est obtenue à partir d'une distorsion Dis définie par la relation suivante:

$$\text{Dis} = \text{Min} \left( \sum_{i=0}^{N-1} [U_i - V_i]^2, \right.$$

$$\sum_{i=0}^{N-1} [U_i + V_i]^2,$$

$$\sum_{i=0}^{N/2-1} [U_{2i+1} - V_{2i+1}]^2 + [U_{2i} + V_{2i}]^2,$$

$$\left. \sum_{i=0}^{N/2-1} [U_{2i+1} + V_{2i+1}]^2 + [U_{2i} - V_{2i}]^2 \right)$$

où

U est un vecteur de coefficients à coder;

V est un vecteur dans le dictionnaire;

i est le rang du coefficient dans un vecteur;

N représente la taille des vecteurs.

Le vecteur représentant le plus proche du vecteur à coder est celui qui minimise l'expression Dis. Cette expression est une combinaison de distorsions particulières, chaque distorsion étant affectée à des correspondances pour des transformations géométriques particulières entre l'espace des blocs images et l'espace des blocs transformés pour mesurer un écart entre le vecteur à coder U et le vecteur représentant V auquel on applique une transformation. Les vecteurs à coder ou représentants sont linéaires. La taille N des vecteurs à coder est variable, de même que la taille des vecteurs représentants dans le dictionnaire. Un vecteur à coder et un vecteur représentant ont la même taille. La transformation du vecteur représentant signifie qu'une distance particulière affecte, à certaines composantes du vecteur représentant V, un signe particulier pour exploiter la correspondance entre les blocs d'image et les blocs transformés lorsqu'on opère des transformations géométriques simples dans les blocs d'image. De façon conventionnelle, le vecteur représentant détecté est associé à une adresse dans le dictionnaire qui est un index dans une table d'indexation contenant les vecteurs représentants. Pour chaque vecteur détecté, cette adresse est identifiée ainsi que la transformation qu'a dû subir le vecteur représentant pour s'approcher le plus possible du vecteur à coder.

Le premier terme de la fonction à minimiser pour obtenir la distorsion Dis correspond à la distorsion quadratique classique (voir article de Linde et al précité). Le deuxième terme correspond à la distorsion quadratique par rapport à l'inverse du vecteur du dictionnaire, ce qui correspond dans l'image à un complément à 255, le troisième, à la distorsion par rapport aux vecteurs traduisant dans l'image une symétrie par rapport à un axe vertical ou horizontal, et le quatrième terme, à son inverse, ce qui correspond dans l'image, à son complément à 255. La distorsion Dis permet de déterminer le vecteur du dictionnaire de base le plus proche du vecteur à coder, soit par lui-même (premier terme), soit sous la forme d'un vecteur dérivé par transformation géométrique (symétrie, complément). L'ensemble des vecteurs du dictionnaire de base et des vecteurs dérivés constitue un dictionnaire élargi. Seuls les vecteurs du dictionnaire de base sont mémorisés de manière permanente. Pour le codage, il faut donc enregistrer l'adresse du vecteur du dictionnaire de base et la transformation géométrique éventuelle à lui appliquer, pour permettre un décodage, cette transformation étant identifiée par le terme de la fonction de distorsion Dis qui a minimisé celle-ci.

En se reportant à la figure 2, le processeur de codage 104, par exemple une unité de traitement à microprocesseur, effectue les traitements suivants à partir des blocs transformés:
- Calcul des paramètres T,H,NH,V,NV,D1,D2,D
- Estimation de mouvements par comparaison d'un bloc transformé 3 à coder avec les blocs transformés prédécesseurs plus proches voisins à partir des composantes fréquentielles continues F(0,0) et du paramètre T et création d'un mot de code particulier pour le déplacement détecté.
- Codage différentiel de la composante fréquentielle continue F(0,0) par calcul de la différence entre deux composantes fréquentielles continues affectées à deux blocs transformés successifs et indexation à une valeur d'un tableau de valeurs d'indexation.
- Classification des blocs transformés 3 à partir des paramètres pré-calculés, vectorisation adaptative et quantification vectorielle à partir d'un dictionnaire 20 enregistré dans un moyen d'enregistrement tel que 116.

Le processeur de codage 104 fait correspondre à chaque bloc transformé 3 une suite de mots de code comprenant au minimum 4 éléments binaires. Un premier mot de code (obligatoire) comprenant 4 éléments binaires est affecté au déplacement détecté pendant l'étape d'estimation de mouvement (ou à l'identification de la classe et des transformations des vecteurs représentants lors de la quantification vectorielle). Un second mot de code comprenant 4 éléments binaires est affecté en tant que de besoin au codage différentiel de la composante fréquentielle continue. Des troisièmes mots de code comprenant chacun au moins 6 éléments binaires (2 pour identifier la transformation, au moins 4 pour l'adresse) sont affectés à l'identification de la position des vecteurs représentants dans le dictionnaire. Un quatrième mot de code (3 éléments binaires) représente la classe géométrique. Le processeur de décodage 108, qui peut être de nature identique au processeur de codage 104, effectue les traitements d'identification des mots codes pour reconstruire un bloc transformé à partir d'un dictionnaire de vecteurs représentants enregistré dans un moyen d'enregistrement tel que 117. Le dictionnaire utilisé pour le décodage est évidemment identique au dictionnaire utilisé pour le codage, c'est-à-dire partitionné en sous-dictionnaires correspondant chacun à une classe visuelle.

Une des caractéristiques avantageuses du procédé de codage de signaux d'image hybride adaptatif selon l'invention est la possibilité d'utiliser un alphabet réduit pour recomposer toutes les évolutions contenues dans l'image. Un exemple concret de dictionnaire exploité pour la quantification vectorielle dans le domaine transformé est présenté ci-dessous. il comporte 16 vecteurs de dimension 5 et 16 vecteurs de dimension 3. Sa formation est basée sur une procédure d'apprentissage telle que celle dite "LBG" qui est décrite dans l'article de Linde et al précité. La classification d'un ensemble de vecteurs, pris le plus large possible a permis l'obtention des représentants les plus significatifs.

1) 16 vecteurs de dimension 5

| 9 | 13 | -21 | -8 | -16 |
|---|---|---|---|---|
| -7 | 3 | -21 | -4 | -16 |
| -5 | -9 | -16 | 2 | -18 |
| -13 | -34 | -4 | 13 | -7 |
| 29 | 21 | -7 | -12 | -4 |
| 8 | 6 | -14 | -8 | -15 |
| -3 | -14 | 3 | -6 | -17 |
| -7 | -22 | 12 | 7 | -18 |
| 26 | 20 | -4 | -11 | 1 |
| -28 | 24 | 5 | -16 | 10 |
| 0 | 0 | 3 | -13 | 2 |
| 1 | -1 | 12 | -14 | 5 |
| 13 | 10 | 16 | -9 | 11 |
| -17 | 1 | 4 | -10 | -5 |
| -5 | -6 | 1 | -8 | -9 |
| -13 | 3 | 3 | 17 | 2 |

2) 16 vecteurs de dimension 3

| 1 | -5 | -2 |
|---|---|---|
| -3 | 5 | -3 |
| -3 | 3 | 0 |
| -4 | 0 | 1 |
| -4 | -1 | 0 |
| -2 | 5 | -5 |

| -1 | 2 | 1 |
|----|----|----|
| -2 | -1 | -1 |
| -3 | -3 | -3 |
| 2 | 5 | -3 |
| 2 | 1 | -4 |
| 1 | -2 | -3 |
| 0 | -5 | -4 |
| 3 | 5 | 0 |
| 2 | 2 | 0 |
| 2 | -3 | -1 |

Les vecteurs de dimension 5 sont utilisés pour coder les coefficients de la première ligne et de la première colonne. Les vecteurs de dimension 3 sont utilisés pour coder les coefficients de la deuxième ligne, de la deuxième colonne et de la diagonale de la matrice transformée en cosinus discrète (en particulier dans les différentes classes géométriques (voir figure 5)).

L'invention met à profit l'identification d'une série de correspondances entre l'espace image et l'espace transformé. Cela offre la possibilité d'utiliser un même vecteur pour représenter plusieurs configurations d'évolutions de luminance. Le changement de polarité affectant les composantes du vecteur influence directement le contenu du bloc image correspondant. Cette caractéristique traduit les propriétés de symétrie par rapport aux axes médians et aux diagonales du bloc transformé, mais aussi des transformations sur la luminance du bloc image, complément par rapport à 255. Ces propriétés permettent de diminuer notablement la taille du dictionnaire. En outre, la mise en oeuvre des mêmes vecteurs dans plusieurs classes géométriques, contribue également à la diminution de la taille du dictionnaire.

Pour visualiser un exemple des correspondances entre l'espace image et l'espace transformé, un bloc transformé a été constitué à l'aide d'un vecteur du dictionnaire. La composante continue du bloc, le premier coefficient $F(0,0)$ en haut à gauche de la matrice représente le double de la moyenne du bloc image. Cette dernière est forcée à 127. Les autres composantes fréquentielles sont mises à zéro.

Bloc transformé (8 x 8)

| 254 | -13 | 3 | 3 | 17 | 2 | 0 | 0 |
|-----|-----|---|---|----|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Nous appliquons la transformée en cosinus discrète inverse sur ce bloc. Le bloc image (8 x 8) obtenu est le suivant :

| 131 | 110 | 111 | 132 | 135 | 125 | 129 | 144 |
|-----|-----|-----|-----|-----|-----|-----|-----|
| 131 | 110 | 111 | 132 | 135 | 125 | 129 | 144 |
| 131 | 110 | 111 | 132 | 135 | 125 | 129 | 144 |
| 131 | 110 | 111 | 132 | 135 | 125 | 129 | 144 |
| 131 | 110 | 111 | 132 | 135 | 125 | 129 | 144 |
| 131 | 110 | 111 | 132 | 135 | 125 | 129 | 144 |
| 131 | 110 | 111 | 132 | 135 | 125 | 129 | 144 |
| 131 | 110 | 111 | 132 | 135 | 125 | 129 | 144 |

Nous pouvons constater qu'il correspond uniquement à des transitions verticales, c'est-à-dire que toutes ses lignes sont identiques. Cela découle directement de la correspondance identifiée, concernant la première ligne de la matrice transformée.

**Application de la symétrie par rapport à l'axe central vertical.**

La table suivante visualise la transformation de polarité affectant les composantes impaires du vecteur initial, elle représente la première ligne du bloc transformé, les autres composantes sont nulles.

| 254 | 13 | 3 | -3 | 17 | -2 | 0 | 0 |
|-----|-----|-----|-----|-----|-----|-----|-----|

Le bloc image obtenu après la transformée inverse est le symétrique du bloc image initial, par rapport à l'axe central vertical. Il est représenté ici par sa première ligne. Les autres lui sont identiques.

| 144 | 129 | 125 | 135 | 132 | 111 | 110 | 131 |
|-----|-----|-----|-----|-----|-----|-----|-----|

**Correspondance liée à l'inversion des valeurs de la luminance par rapport à 255.**

Le second changement de signe des coefficients affecte toutes les composantes fréquentielles alternatives du vecteur initial.

| 256 | 13 | -3 | -3 | -17 | -2 | 0 | 0 |
|-----|-----|-----|-----|-----|-----|-----|-----|

Son correspondant dans le domaine image est composé par des pixels dont la luminance est le complémentaire à 255 de celle des pixels qui compose le bloc image initial. Comme précédemment, seule la première ligne est représentée.

| 124 | 145 | 144 | 123 | 120 | 130 | 126 | 111 |
|-----|-----|-----|-----|-----|-----|-----|-----|

**Application du changement de la polarité des composantes paires du vecteur initial.**

De la même manière, la symétrie par rapport à l'axe central du bloc image précédent découle du changement de polarité des composantes impaires du vecteur.

11

| 256 | -13 | -3 | 3 | -17 | 2 | 0 | 0 |
|-----|-----|----|----|-----|---|---|---|

La table de coefficients précédente correspond dans le domaine image au bloc image ci-dessous. Seule la première ligne est représentée, toutes les lignes étant identiques comme précédemment.

| 111 | 126 | 130 | 120 | 123 | 144 | 145 | 124 |
|-----|-----|-----|-----|-----|-----|-----|-----|

**Symétrie par rapport à la première diagonale.**

Il existe également une correspondance qui concerne la symétrie par rapport à la première diagonale du bloc transformé. En effet, elle est directement transposable sur le bloc image.

| Bloc transformé |
|:---:|
| 254 |
| -13 |
| 3 |
| 3 |
| 17 |
| 2 |
| 0 |
| 0 |

| Bloc image |
|:---:|
| 131 |
| 110 |
| 111 |
| 132 |
| 135 |
| 125 |
| 129 |
| 144 |

La matrice de fréquences spatiales représentée par sa première colonne - les autres coefficients sont nuls - La transformée en cosinus discrète inverse donne un bloc image composé de transitions horizontales. Il est représenté ici par sa première colonne, les mêmes valeurs se reproduisant sur les colonnes.

Toutes les transformations que subit la polarité des composantes du vecteur sont reproductibles dans ce cas de figure. En effet, les changements décrits précédemment s'appliquent pour donner une symétrie par rapport à l'axe central horizontal ou la seconde diagonale par exemple.

Ces différentes caractéristiques ont été démontrées en utilisant les propriétés de parité de la fonction cosinus. Elles permettent d'augmenter la représentativité du dictionnaire. Cette caractéristique avantageuse offre la possibilité d'exploiter des dictionnaires de tailles réduites, sachant que chaque vecteur peut être manipulé pour composer des configurations différentes d'évolutions de luminance.

A titre illustratif, a été représenté à la figure 6, un bloc image (N°1) correspondant à un vecteur primaire de fréquences alternatives. Les blocs N°2, N°3 et le N°4 correspondent aux blocs symétriques du bloc initial obtenus par manipulation de la position et du signe des composantes fréquentielles. De la même manière on obtient le bloc N°5 qui est formé par des pixels dont la luminance est le complémentaire de celle des pixels qui forment le bloc N°1. Les derniers blocs N°6 à N°8 sont les symétriques du bloc N°5 par rapport à ses diagonales et à ses axes centraux vertical et horizontal.

A partir d'un seul vecteur $V_1$ mémorisé qui correspond au bloc N°1, on peut reconstituer avantageusement tous les autres vecteurs des blocs 2 à 8, soit 4 vecteurs disposés sur la première ligne du bloc transformé (par des transitions verticales) et 4 vecteurs disposés sur la première colonne du bloc transformé (pour des transitions horizontales). La distorsion Dis ne prend pas en compte le fait que le vecteur est utilisé sur une ligne ou sur une colonne, etc... C'est pourquoi la formule de distorsion Dis donnée ci-avant ne comporte pour chaque vecteur du dictionnaire de base, que quatre termes à calculer et dont le plus petit est retenu. Elle incorpore les transformations géométriques appliquées aux vecteurs du dictionnaire de base et permet donc d'effectuer les calculs pour tous les vecteurs du dictionnaire élargi en n'appelant en mémoire que les vecteurs du dictionnaire de base.

**La distorsion exploitée pour la quantification vectorielle.**

Le paramètre de distorsion mis en oeuvre selon un mode préféré de l'invention manipule la polarité des composantes des vecteurs. Il s'adapte parfaitement à la correspondance entre les fréquences spatiales et les évolutions de luminance qu'elles représentent. Ce paramètre traduit en partie le signe variable des gradients calculés sur les blocs de pixels. Il permet d'éviter de mémoriser plusieurs sous-dictionnaires indépendants représentant toutes les possibilités de positions pour la même transition dans un bloc d'image. Il suffit d'appeler les vecteurs du dictionnaire et de leur appliquer les opérations désirées (changement de signe, etc...) pour obtenir les autres vecteurs.

Une amélioration de la qualité subjective de l'image peut, bien entendu, être obtenue avec des dictionnaires plus importants, par exemple de 2 x 64 vecteurs avec des nombres de bits par pixel obtenus, de l'ordre de 0,3 à 0,6.

Le débit mentionné est un débit réel obtenu à la suite du codage d'images de référence. Le taux de compression peut être amélioré en utilisant un codage de Huffman exploité couramment dans ce type d'applications.

Rappelons que la technique de Huffman est applicable à chaque fois que se présentent des séquences de données répétitives. Elle exploite pour cela, la fréquence d'apparition de chaque valeur à transmettre pour évaluer le nombre de bits nécessaires pour former son nouveau mot de code.

Le codage par quantification vectorielle est parfaitement adapté à cette amélioration. Les valeurs à transmettre pour chaque bloc image sont essentiellement les adresses des vecteurs les plus proches dans le dictionnaire. La fréquence d'apparition de chaque adresse est fonction de la pertinence du vecteur correspondant. Il est donc judicieux de coder les adresses sur des mots code de longueurs variables. La réduction de débit apportée par le codage de Huffman est utilisée aussi dans les techniques de codage par quantification scalaire. Il offre un gain important en taux de compression.

Décodage rapide :

Une autre particularité avantageuse de l'invention est la possibilité offerte d'un décodage rapide. Dix opérations simples par pixel (additions, chargements) peuvent, en pratique, s'avérer suffisantes pour recomposer l'image. La transformée en cosinus inverse est ainsi évitée, ce qui diminue avantageusement le coût du décodeur.

Le procédé de décodage selon l'invention exploite, de la même manière que le codage, les structures visuelles formant les blocs image. Il est applicable à chaque fois qu'il est nécessaire de décoder les images le plus rapidement possible et sans pour cela, avoir besoin de matériel spécifique et particulièrement sans avoir besoin de processeur de traitement du signal pour effectuer la TCD inverse. Ceci apporte un grand avantage pratique, en particulier, dans les réseaux de transmission. Le récepteur est en effet à même de réaliser un décodage sans disposer de processeur spécifique : un logiciel adapté suffit.

Le procédé de décodage rapide ne nécessite aucune multiplication, il exploite les propriétés géométriques identifiées lors de la classification pour recomposer l'image décodée. Les manipulations utilisées se limitent à des inversions de signes, des déplacements des valeurs stockées en mémoire et des additions. Dans le cas le plus défavorable, pour chaque pixel, une dizaine d'opérations sont nécessaires, ce qui est sans commune mesure avec l'inversion de la transformée en cosinus discrète, pour laquelle il est indispensable d'effectuer pour chaque pixel 64 multiplications et autant d'additions, d'où une complexité coûteuse en temps de calcul et qui pénalise en outre directement le prix de développement et par conséquent celui du décodeur.

Le procédé de décodage rapide est au moins en partie lié aux caractéristiques du codage décrit ci-dessus , pour lesquelles ont été exploitées des correspondances entre l'espace image et l'espace transformé. Les structures géométriques contenues dans l'image sont identifiables par les évolutions de luminance qui leurs sont affectées.

Chaque bloc d'image est codé indépendamment de ses voisins. La transformée en cosinus discrète est appliquée, elle offre une nouvelle représentation du bloc initial. A une classification en fonction des propriétés géométriques du bloc, suit un codage par quantification vectorielle des coefficients pertinents retenus. Dans un bloc, plusieurs vecteurs peuvent être codés. Leur nombre varie de 0 à 5 selon les différentes classes géométriques. Chaque vecteur est codé par son adresse dans le dictionnaire de base et le cas échéant, la transformation géométrique qui lui est appliquée. Au décodage, le bloc transformé est recomposé par les vecteurs affectés, et restitué à partir du dictionnaire similaire au premier.

Selon l'invention, la linéarité de la transformation bi-dimensionnelle, en particulier en cosinus discrète TCD, permet une reconstruction de l'image d'après ses composantes vectorielles formées de coefficients transformés. Une opération de transformée inverse sur tous les vecteurs du dictionnaire est effectuée une fois à l'initialisation avant le début du codage.

Le procédé de codage reste tel que décrit ci-dessus.

Le procédé de décodage rapide utilise comme dictionnaire une table de blocs de valeurs pseudoluminance, correspondant à la transformée inverse des vecteurs initiaux composés d'éléments transformés TCD. Pour le codage, on a utilisé les manipulations des vecteurs transformés affectant les signes de leurs composantes. Ces opérations sont transposables dans le domaine des pixels, car elles découlent directement des propriétés visuelle de l'image et de leurs correspondances dans le domaine transformé. L'identification de ces caractéristiques géométriques (visuelles) permet leur utilisation dans le décodage rapide.

A chaque vecteur on fait correspondre sa transformée inverse, à savoir un bloc image élémentaire de mêmes dimensions qu'un bloc image et représentant les évolutions primitives décrites par le vecteur dans le domaine transformé. Les blocs images élémentaires correspondant aux différents vecteurs sont mémorisés. Dans l'exemple précité, il suffit de mémoriser une seule ligne du bloc image élémentaire pour les vecteurs de dimension 5 utilisés pour la première ligne, et la première colonne (soit 8 valeurs seulement en fait). Par contre, pour chacun des vecteurs de dimension 3, la totalité d'un bloc image élémentaire entier (8 x 8) doit être mémorisé. Le bloc image élémentaire est par exemple obtenu en disposant le vecteur sur la première ligne s'il est de dimension 5, et sur la seconde pour 3 et en lui appliquant la transformée bidimensionnelle inverse. Les autres coefficients sont pris égaux à zéro. Cela se traduit par un bloc élémentaire de pixels dont les valeurs ont une moyenne zéro et dont certaines sont négatives.

Par affectations des signes et par disposition des composantes des vecteurs du dictionnaire dans l'espace transformé, on obtient des symétries par rapport aux deux médianes ainsi que l'inversion des signes des valeurs de pseudo-luminance des pixels du bloc primaire. Un changement de position du vecteur par rapport aux deux diagonales dans le bloc transformé est également transposable dans le bloc image.

La transformation image est obtenue en faisant correspondre à chaque vecteur codant un bloc image initial, son propre bloc image élémentaire mémorisé dans le décodeur, auquel est éventuellement appliquée la transformation géométrique mise en oeuvre lors du codage. Les différents blocs image élémentaires ainsi obtenus sont superposés par addition pixel par pixel, en vue de reconstituer le bloc image initial.

Le décodeur applique au bloc image élémentaire mémorisé correspondant au vecteur codé, les transformations géométriques mises en oeuvre lors du codage. En effet, s'agissant en général de symétries ou de compléments, ces transformations sont en général égales à leur inverse. Le bloc image représentant la composante continue $F(0,0)$ est uniforme, il est superposé, par addition, aux autres blocs image élémentaires obtenus après les manipulations affectées à chaque vecteur codé, pour obtenir le bloc image initial reconstitué après décodage.

L'opération de décodage se trouve, ici, avantageusement simplifiée. Elle se traduit par une succession d'opérations simples :

- la symétrie par rapport à l'axe principal vertical ou horizontal traduit l'inversion des signes des composantes paires des vecteurs,
- le changement de la position du vecteur par rapport à la diagonale provoque une rotation du bloc image primaire,
- l'inversion du signe des valeurs de pseudoluminance découle de l'inversion du signe de tous les coefficients transformés,
- pour reconstruire le bloc image incident, la somme des blocs images primaires obtenus à partir des vecteurs, est effectuée.

Le temps d'exécution du décodage est ainsi très diminué. Des images décodées sont obtenues en ayant effectué et mémorisé la transformée en cosinus discrète une fois pour toute avant le début des opérations de décodage et seulement pour les blocs constitués par les valeurs des coefficients qui forment les vecteurs, les autres étant nuls.

Pour la transmission d'images animées, les blocs composés des évolutions primaires de luminance sont préalablement stockés dans la mémoire du décodeur. Les vecteurs les plus utilisés et les plus pertinents visuellement sont les vecteurs verticaux et horizontaux de dimension 5. Ils sont représentés par des évolutions verticales, une simple symétrie par rapport à la diagonale complète les autres cas de figure. Les blocs image qui les représentent visualisent des transitions verticales, chacune des colonnes conserve la même valeur sur toutes les lignes. Donc, pour mémoriser les blocs représentant les vecteurs de dimension 5, il suffit, comme indiqué ci-dessus, de stocker en mémoire la première ligne du bloc image correspondant.

Bien entendu, en ce qui concerne les images, l'invention n'est pas limitée au codage de signaux d'image en noir et blanc et peut s'étendre au codage de signaux d'image couleur.

Plus généralement, l'invention s'applique aux signaux numérisés sous forme de blocs, quelle que soit la nature des signaux numérisés.

La transformée en consinus discrète, qui est une forme de transformée de Fourier, a été donnée à titre d'exemple. D'autres transformées mathématiques peuvent être mises en oeuvre en utilisant les propriétés géométriques ainsi que la classification des blocs transformés, en particulier les transformées de Hadamard, Haar et Karhunen-Loève. Il en va de même en ce qui concerne le décodage qui peut être mis en oeuvre sans réaliser la transformée inverse.

Le codage selon l'invention, en raison du fait qu'il met en oeuvre un nombre relativement peu élevé d'opérations pour calculer la distorsion Dis peut être mis en oeuvre à l'aide d'une logique câblée composée de cellules élémentaires dont chacune est susceptible de calculer un terme de la formule de distorsion Dis. Chaque cellule comporte une mémoire pour mémoriser le résultat de la comparaison entre un vecteur du dictionnaire élargi dont les coefficients sont introduits par une première entrée de la cellule correspondante et les coefficients correspondants du bloc transformé. Il y a autant de cellules que de vecteurs du dictionnaire élargi. Les cellules sont montées en parallèle et les comparaisons entre vecteurs du dictionnaire élargi et les coefficients du bloc transformé sont réalisées en série. Pour les classes géométriques 405 et 406 par exemple, il faut itérer deux fois la comparaison (pour les vecteurs de dimension 5 sur la première ligne puis la première colonne, pour les vecteurs de dimension 3, sur la deuxième ligne puis la deuxième colonne). Les résultats mémorisés dans les cellules sont utilisés pour le choix des vecteurs.

Il résulte de ceci qu'il est possible d'envisager que le codeur soit réalisé sous forme de circuit intégré.

## Revendications

1. Procédé de codage d'un signal numérisé sous forme d'au moins un bloc à coder (2) et comprenant chacun un nombre prédéterminé d'échantillons numériques, dans lequel ledit bloc de signal numérisé à coder est transformé par une transformation bi-dimensionnelle pour produire un bloc transformé (3) de coefficients transformés représentant les composantes fréquentielles du bloc, ledit bloc transformé (3) étant représenté au cours d'une étape de quantification vectorielle par un bloc vectorisé comportant au moins un vecteur de coefficients transformés sélectionné dans un dictionnaire, caractérisé en ce que l'étape de quantification vectorielle met en oeuvre pour ladite sélection une distorsion appliquée aux vecteurs d'un dictionnaire élargi comprenant d'une part les vecteurs d'un dictionnaire de base et, d'autre part, des vecteurs dérivés obtenus en appliquant aux vecteurs du dictionnaire de base des transformations géométriques pour lesquelles, lorsqu'elles sont appliquées aux blocs de signal numérisé, leur correspondent également des transformations spécifiques dans les blocs transformés (3).

2. Procédé selon la revendication 1, caractérisé en ce que ladite distorsion est une fonction à minimiser combinant des distorsions traduisant des correspondances pour lesdites transformations géométriques entre l'espace des blocs de signal numérisé et les blocs transformés, ladite fonction étant appliquée aux vecteurs du dictionnaire de base.

3. Procédé selon une des revendications 1 ou 2, caractérisé en ce qu'il comporte également les étapes suivantes :
   - classer (14) en plusieurs classes géométriques (401i .... 406i) les blocs transformés en fonction de caractéristiques géométriques dominantes des blocs transformés, représentées par des paramètres dérivés desdits coefficients transformés, chaque classe géométrique présentant un sous-dictionnaire, au moins certains vecteurs du dictionnaire de base étant présents dans au moins deux sous-dictionnaires par lui-même et/ou au moins un de ses vecteurs dérivés,
   - sélectionner (15), dans le sous-dictionnaire correspondant, chaque vecteur de coefficients en fonction des coefficients particuliers du bloc transformé, choisis en fonction de la classification du bloc transformé.

4. Procédé selon une des revendications 1 à 3, caractérisé en ce que ladite classification (14) des blocs transformés comprend les étapes suivantes:
   - calculer les paramètres suivants:

$$H = \sum_{v=1}^{n-1} [F(0,v)]^2$$

$$NH = \sum_{u=1}^{n-1} \sum_{v=0}^{n-1} [F(u,v)]^2$$

$$V = \sum_{u=1}^{n-1} [F(u,0)]^2$$

$$NV = \sum_{u=0}^{n-1} \sum_{v=1}^{n-1} [F(u,v)]^2$$

$$D1 = \sum_{u=0}^{n-1} \sum_{v=0}^{n-1} [F(u,v) - F(v,u)]^2$$

$$D2 = ( \sum_{u=0}^{n/2-1} \sum_{v=0}^{n/2-1} [F(2u,2v) - F(2v,2u)]^2 +$$

$$\sum_{u=0}^{n/2-1} \sum_{v=0}^{n/2-1} [F(2u+1,2v+1) - F(2v+1,2u+1)]^2 ) +$$

$$( \sum_{u=0}^{n/2-1} \sum_{v=0}^{n/2-1} [F(2u,2v+1) + F(2v+1,2u)]^2 )$$

$$D = \sum_{u=1}^{n-1} [F(u,u)]^2$$

où

n représente la dimension d'un bloc transformé de taille (n,n)

$F(u,v)$ représente un coefficent;

u,v représentent les coordonnés d'un coefficient dans un bloc transformé.

- déterminer une classe géométrique à laquelle appartient le bloc transformé considéré à partir de la comparaison des paramètres H,NH,V,NV,D1,D2,D à des valeurs de seuil prédéterminées.

5.  Procédé selon la revendication 4, caractérisé en ce qu'il comporte une première étape dans laquelle est déterminée l'appartenance des blocs transformés appartenant à des classes dites d'activité (300-303) en comparant un paramètre T à des premières valeurs de 0 seuil, T étant défini par la formule suivante :

$$T = ( \sum_{u=0}^{n-1} \sum_{v=0}^{n-1} [F(u,v)]^2 ) - [F(0,0)]^2$$

et une deuxième étape dans laquelle est déterminée l'appartenance des blocs transformés auxdites classes géométriques (401-406) en comparant les paramètres NH/H, NV/V, D1, D2, D à des secondes valeurs de seuil.

6.  Procédé selon la revendication 2, caractérisé en ce que ledit dictionnaire de base (20) de quantification vectorielle est formé de vecteurs représentants V pour coder un vecteur de coefficients U, la distorsion (Dis) étant définie par la relation suivante:

EP 0 524 871 B1

$$\text{Dis} = \text{Min} \left( \sum_{i=0}^{N-1} [U_i - V_i]^2, \right.$$

$$\sum_{i=0}^{N-1} [U_i + V_i]^2,$$

$$\sum_{i=0}^{N/2-1} [U_{2i+1} - V_{2i+1}]^2 + [U_{2i} + V_{2i}]^2,$$

$$\left. \sum_{i=0}^{N/2-1} [U_{2i+1} + V_{2i+1}]^2 + [U_{2i} - V_{2i}]^2 \right)$$

où Ui,Vi représentent les composantes de rang i des vecteurs U et V;
et N représente la taille des vecteurs U,V.

7. Procédé selon la revendication 1, caractérisé en ce qu'il comporte une étape dans laquelle est appliquée une quantification scalaire (17) à la composante fréquentielle continue dans un bloc transformé et une quantification vectorielle (16) aux composantes fréquentielles alternatives dans le bloc transformé.

8. Procédé de décodage d'un signal numérisé sous forme d'au moins un bloc transformé et codé par le procédé selon une des revendications précédentes, caractérisé en ce qu'il met en oeuvre un décodage mémorisant les informations pertinentes d'un bloc image élémentaire traduisant la transformée bi-dimensionnelle inverse au moins de chacun des vecteurs du dictionnaire de base et en ce qu'il comporte les étapes suivantes :
   - faire correspondre à chaque vecteur mis en oeuvre pour coder un bloc transformé à décoder, un bloc élémentaire de signal numérisé à partir desdites informations mémorisées,
   - superposer par addition, lesdits blocs élémentaires ainsi qu'un bloc de fond continu pour obtenir un bloc de signal numérisé reconstitué.

9. Procédé de décodage selon la revendication 8, caractérisé en ce que ladite correspondance est obtenue en appliquant le cas échéant, la transformation géométrique correspondant au bloc élémentaire du vecteur correspondant du dictionnaire de base, seule ladite information relative aux vecteurs du dictionnaire de base étant mémorisée.

10. Procédé de décodage selon une des revendications 8 ou 9, caractérisé en ce qu'au moins certains des vecteurs du dictionnaire de base sont codés uniquement sur la première ligne ou la première colonne d'un bloc élémentaire et en ce que ladite information mémorisée est celle d'une ligne (ou colonne) significative.

**Patentansprüche**

1. Verfahren zur Kodierung eines in Form von zumindest einem zu kodierenden Block (2) digitalisierten Signals, das jeweils eine vorbestimmte Anzahl an Digitalmustern aufweist, wobei bei dem Verfahren der zu kodierende digitalisierte Signalblock durch eine zweidimensionale Umwandlung umgewandelt wird, um einen umgewandelten Block (3) mit umgewandelten Koeffizienten herzustellen, die die frequentiellen Komponenten des Blockes darstellen, wobei der umgewandelte Block (3) im Laufe einer vektoriellen Quantifizierungsstufe von einem vektorisierten Block dargestellt wird, der wenigstens einen aus einem Verzeichnis ausgewählten Vektor mit umgewandelten Koeffizienten aufweist, dadurch gekennzeichnet, daß die Stufe der vektoriellen Quantifizierung zur Auswahl eine Verzerrung einsetzt, die auf die Vektoren eines erweiterten Verzeichnisses angewandt wird, das einerseits die Vektoren eines Basisverzeichnisses und andererseits abgeleitete Vektoren umfaßt, die durch Anwendung von geometrischen Umwandlungen auf die Vektoren des Basisverzeichnisses erhalten wurden, wobei den geometrischen Umwandlungen, wenn sie auf die digitalisierten Signalblöcke angewandt werden, ebenso speziellen Umwandlungen in den umgewandelten Blöcken (3) entsprechen.

17

2. Verfahren gemäß Anspruch 1, dadurch gekennzeichnet, daß die Verzerrung eine zu minimierende Funktion ist, die Verzerrungen kombiniert, die Zuordnungen für die geometrischen Umwandlungen zwischen dem Raum der digitalisierten Signalblöcke und der umgewandelten Blöcke übersetzen, wobei die Funktion auf die Vektoren des Basisverzeichnisses angewandt wird.

3. Verfahren gemäß einem der Ansprüche 1 oder 2, dadurch gekennzeichnet, daß es ebenso die folgenden Stufen aufweist:
   - Klassifizierung (14) der umgewandelten Blöcke in mehrere geometrische Klassen (401i....406i) in Abhängigkeit von den vorherrschenden geometrischen Eigenschaften der umgewandelten Blöcke, die erstere von Parametern dargestellt sind, die von den umgewandelten Koeffizienten abgeleitet sind, wobei jede geometrische Klasse ein Unterverzeichnis aufweist, und wobei wenigstens gewisse Vektoren des Basieverzeichnisses in wenigstens zwei Unterverzeichnissen durch sich selbst und-/oder wenigstens einen ihrer abgeleiteten Vektoren vorliegen,
   - Auswahl (15) aus dem entsprechenden Unterverzeichnis eines jeden Koeffizienten-Vektors in Abhängigkeit von den besonderen Koeffizienten des umgewandelten Blockes, die in Abhängigkeit von der Klassifizierung des umgewandelten Blockes gewählt werden.

4. Verfahren gemäß einem der Ansprüche 1 bis 3, dadurch gekennzeichnet, daß die Klassifizierung (14) der umgewandelten Blöcke die folgenden Stufen umfaßt:
   - Berechnen der folgenden Parameter:

$$H = \sum_{v=1}^{n-1} [F(0,v)]^2$$

$$NH = \sum_{u=1}^{n-1} \sum_{v=0}^{n-1} [F(u,v)]^2$$

$$V = \sum_{u=1}^{n-1} [F(u,0)]^2$$

$$NV = \sum_{u=0}^{n-1} \sum_{v=1}^{n-1} [F(u,v)]^2$$

$$D1 = \sum_{u=0}^{n-1} \sum_{v=0}^{n-1} [F(u,v) - F(v,u)]^2$$

$$D2 = (\sum_{u=0}^{n/2-1} \sum_{v=0}^{n/2-1} [F(2u,2v) - F(2v,2u)]^2 +$$

$$\sum_{u=0}^{n/2-1} \sum_{v=0}^{n/2-1} [F(2u+1,2v+1) - F(2v+1,2u+1)]^2) +$$

$$(\sum_{u=0}^{n/2-1} \sum_{v=0}^{n/2-1} [F(2u,2v+1) + F(2v+1,2u)]^2)$$

$$D = \sum_{u=1}^{n-1} [F(u,u)]^2$$

wobei n die Dimension eines umgewandelten Blockes von der Größe (n,n) darstellt
F(u,v) einen Koeffizienten darstellt;
u,v die Koordinaten eines Koeffizienten in einem umgewandelten Block darstellen.
- Bestimmung einer geometrischen Klasse, zu der der umgewandelte Block gehört, der ausgehend von dem Vergleich der Parameter H, NH, V, NV, D1, D2, D mit den vorbestimmten Schwellenwerten betrachtet wird.

5. Verfahren gemäß Anspruch 4, dadurch gekennzeichnet, daß es eine erste Stufe aufweist, bei der die Zugehörigkeit der umgewandelten Blöcke, die sogenannten Aktivitätsklassen (300-303) angehören, bestimmt wird, indem man einen Parameter T mit den ersten Schwellenwerten vergleicht, wobei T durch die folgende Formel definiert ist:

$$T = (\sum_{u=0}^{n-1} \sum_{v=0}^{n-1} [F(u,v)]^2) - [F(0,0)]^2$$

und eine zweite Stufe, bei der die Zugehörigkeit der umgewandelten Blöcke zu den geometrischen Klässen (401-406) bestimmt wird, indem man die Parameter NH/H, NV/V, D1, D2, D mit den zweiten Schwellenwerten vergleicht.

6. Verfahren gemäß Anspruch 2, dadurch gekennzeichnet, daß das Basisverzeichnis (20) der vektoriellen Quantifizierung von Darstellungsvektoren V gebildet ist, um einen Vektor mit den Koeffizienten U zu kodieren, wobei die Verzerrung (Dis) von dem folgenden Bezug definiert ist:

$$Dis = Min \left( \sum_{i=0}^{N-1} [U_i - V_i]^2, \quad \sum_{i=0}^{N-1} [U_i + V_i]^2, \right.$$

$$\sum_{i=0}^{N/2-1} [U_{2i+1} - V_{2i+1}]^2 + [U_{2i} + V_{2i}]^2,$$

$$\left. \sum_{i=0}^{N/2-1} [U_{2i+1} + V_{2i+1}]^2 + [U_{2i} - V_{2i}]^2 \right)$$

wobei Ui, Vi die Rangkomponenten i der Vektoren U und V darstellen;
und N die Größe der Vektoren U, V darstellt.

7. Verfahren gemäß Anspruch 1, dadurch gekennzeichnet, daß es eine Stufe aufweist, bei der eine Skalarquantifizierung (17) auf die Gleichfrequenzkomponente in einem umgewandelten Block und eine vektorielle Quantifizierung (16) auf die Wechselfrequenzkomponenten in dem umgewandelten Block angewandt werden.

8. Verfahren zur Dekodierung eines in Form von zumindest einem umgewandelten und durch das Verfahren gemäß einem der vorherigen Ansprüche kodierten Block digitalisierten Signals, dadurch gekennzeichnet, daß es eine Dekodierung einsetzt, die die relevanten Informationen eines elementaren Bildblocks speichert, der die zweidimensionale Rücktransformierte zumindest von jedem der Vektoren des Basisverzeichnisses übersetzt, und dadurch, daß es die folgenden Stufen aufweist:
   - man läßt jedem zur Kodierung eines zu dekodierenden umgewandelten Blockes eingesetzten Vektor einen elementaren digitalisierten Signalblock ausgehend von den gespeicherten Informationen entsprechen,
   - man überlagert durch Addition die elementaren digitalisierten Signalblöcke sowie einen durchgehenden Grundblock, um einen wiederhergestellten digitalisierten Signalblock zu erhalten.

9. Verfahren zur Dekodierung gemäß Abspruch 8, dadurch gekennzeichnet, daß die Zuordnung erhalten wird, indem man gegebenenfalls die entsprechende geometrische Umwandlung auf den Elementarblock des entsprechenden Vektors des Basisverzeichnisses anwendet, wobei nur die Information bezüglich der Vektoren des Basisverzeichnisses gespeichert wird.

10. Verfahren zur Dekodierung gemäß einem der Ansprüche 8 oder 9, dadurch gekennzeichnet, daß wenigstens einige der Vektoren des Basisverzeichnisses einzig auf der ersten Linie oder der ersten Säule eines Elementarblocks kodiert werden, und dadurch, daß die gespeicherte Information diejenige einer geltenden Linie (oder Säule) ist.

## Claims

1. Method of coding a digitised signal in the form of at least one block for coding (2), and each comprising a predetermined number of numerical samples, wherein said digitised-signal block for coding is transformed by a bi-dimensional transformation in order to produce a transformed block (3) of transformed coefficients representing the frequential components of the block, said transformed block (3) being represented during a vectorial quantification stage by a vectorised block comprising at least one vector of transformed coefficients selected from a dictionary, characterised in that the vectorial quantification stage puts into effect, for said selection, a distortion applied to the vectors of an enlarged dictionary comprising, on the one hand, the vectors of a base dictionary and, on the other hand, derived vectors obtained by applying to the vectors of the base dictionary geometrical transformations for which, when they are applied to the digitised-signal blocks, specific transformations in the transformed blocks (3) also correspond thereto.

2. Method according to claim 1, characterised in that said distortion is a minimising function combining distortions translating correspondences for said geometrical transformations between the space of the digitised-signal blocks and the transformed blocks, said function being applied to the vectors of the base dictionary.

3. Method according to one of claims 1 or 2, characterised in that it also comprises the following stages:
   - classifying (14) in a plurality of geometrical classes (401i... 406i) the transformed blocks as a function of dominant geometrical features of the transformed blocks, represented by parameters derived from said transformed coefficients, each geometrical class having a sub-dictionary, at least some vectors of the base dictionary being present in at least two sub-dictionaries by itself and/or at least one of its derived vectors; and
   - selecting (15), from the corresponding sub-dictionary, each vector of coefficients as a function of the particular coefficients of the transformed block, chosen as a function of the classification of the transformed block.

4. Method according to one of claims 1 to 3, characterised in that said classification (14) of the transformed blocks comprises the following stages:
   - calculating the following parameters:

$$H = \sum_{v=1}^{n-1} [F(0,v)]^2$$

$$NH = \sum_{u=1}^{n-1} \sum_{v=0}^{n-1} [F(u,v)]^2$$

$$V = \sum_{u=1}^{n-1} [F(u,0)]^2$$

$$NV = \sum_{u=0}^{n-1} \sum_{v=1}^{n-1} [F(u,v)]^2$$

$$D1 = \sum_{u=0}^{n-1} \sum_{v=0}^{n-1} [F(u,v) - F(v,u)]^2$$

$$D2 = (\sum_{u=0}^{n/2-1} \sum_{v=0}^{n/2-1} [F(2u,2v) - F(2v,2u)]^2 + \sum_{u=0}^{n/2-1} \sum_{v=0}^{n/2-1} [F(2u+1,2v+1) - F(2v+1,2u+1)]^2) + (\sum_{u=0}^{n/2-1} \sum_{v=0}^{n/2-1} [F(2u,2v+1) + F(2v+1,2u)]^2)$$

$$D = \sum_{u=1}^{n-1} [F(u,u)]^2 \, ,$$

where:

n represents- the dimension of one transformed block of the size (n,n);

F(u,v) represents a coefficient; and

u and v represent the coordinates of a coefficient in a transformed block; and

- determining a geometrical class to which the transformed block in question belongs, on the basis of the comparison of the parameters H, NH, V, NV, D1, D2 and D at predetermined threshold values.

5. Method according to claim 4, characterised in that it comprises a first stage in which there is determined the relationship of the transformed blocks belonging to so-called activity classes (300-303) by comparing a parameter T to first threshold values, T being defined by the following formula:

$$T = ( \sum_{u=0}^{n-1} \sum_{v=0}^{n-1} [F(u,v)]^2 ) - [F(0,0)]^2 ,$$

and a second stage in which there is determined the relationship of the transformed blocks to said geometrical classes (401-406) by comparing the parameters NH/H, NV/V, D1, D2 and D to second threshold values.

6. Method according to claim 2, characterised in that said base dictionary (20) for vectorial quantification is formed from representative vectors V in order to code a vector of coefficients U, the distortion (Dis) being defined by the following equation:

$$Dis = Min ( \sum_{i=0}^{N-1} [U_i - V_i]^2 ,$$

$$\sum_{i=0}^{N-1} [U_i + V_i]^2 ,$$

$$\sum_{i=0}^{N/2-1} [U_{2i+1} - V_{2i+1}]^2 + [U_{2i} + V_{2i}]^2 ,$$

$$\sum_{i=0}^{N/2-1} [U_{2i+1} + V_{2i+1}]^2 + [U_{2i} - V_{2i}]^2 ) ,$$

where $U_i$ and $V_i$ represent the rank components i of the vectors U and V;

and N represents the size of the vectors U and V.

7. Method according to claim 1, characterised in that it comprises a stage in which a scalar quantification (17) is applied to the continuous frequential component in a transformed block, and a vectorial quantification (16) applied to the alternative frequential components in the transformed block.

8. Decoding method for digitised signal in the form of at least one block transformed and coded by the method according to one of the preceding claims, characterised in that it puts into effect decoding in which there is memorised the pertinent information of an elementary image block translating the inverse bi-dimensional transform of at least each of the vectors of the base dictionary, and in that it comprises the following stages:
- causing an elementary digitised-signal block to correspond to each vector actuated in order to code a transformed block for decoding on the basis of said memorised information; and
- surimposing, by addition, said elementary blocks as well as a continuous basic block, in order to obtain a reconstituted digitised-signal block.

9. Decoding method according to claim 8, characterised in that said correspondence is obtained by applying, as the case arises, the geometrical transformation corresponding to the elementary block of the corresponding vector of the base dictionary, only said information relating to the vectors of the base dictionary being memorised.

10. Decoding method according to one of claims 8 or 9, characterised in that at least some of the vectors of the base dictionary are coded only on the first line or the first column of an elementary block, and in that said memorised information is that of a significant line (or column).

FIG.3

FIG.1

100

CAM

CAN

101

102

TCD

103

CALCUL
CODAGE

104

105

116

117

Moniteur
VIDEO

111

CNA

TCD
inverse

CALCUL
DECODAGE

107 106

112

110

109

108

115

FIG.2

DÉBUT

210

0<T<ST0

OUI

300

211

ST0≤T<ST1

OUI

A₁

301

212

ST1≤T<ST2

OUI

A₂

302

NON

FIG.4

A₃

303

# FIG.5

Ai

213 — NH/H<SHi → OUI → 401i

214 — NV/V<SVi → OUI → 402i

215 — D1<SD1i → OUI → 403i

215 — D2<SD2i → OUI → 404i

217 — D<SDi → OUI → 405i

NON → 406i

$V_1$
(horizontal)

Bloc N°1

$-V_1$
(horizontal)

Bloc N°5

Bloc N°2

Bloc N°6

$V_1$
(vertical)

Bloc N°3

Bloc N°7

$-V_1$
(vertical)

Bloc N°4

Bloc N°8

FIG. 6